(19) Europäisches Patentamt / European Patent Office / Office européen des brevets

(11) **EP 3 039 397 B1**

(12) **FASCICULE DE BREVET EUROPEEN**

(45) Date de publication et mention de la délivrance du brevet:
**04.09.2024 Bulletin 2024/36**

(21) Numéro de dépôt: **14796806.9**

(22) Date de dépôt: **09.10.2014**

(51) Classification Internationale des Brevets (IPC):
**G01M 15/12** *(2006.01)* **G01N 29/46** *(2006.01)*
**G01N 29/44** *(2006.01)* **G01N 29/14** *(2006.01)*
**G01M 15/14** *(2006.01)*

(52) Classification Coopérative des Brevets (CPC):
**G01M 15/14; G01M 15/12; G01N 29/14; G01N 29/4436; G01N 29/4454; G01N 29/449; G01N 29/46;** G01N 2291/2693

(86) Numéro de dépôt international:
**PCT/FR2014/052556**

(87) Numéro de publication internationale:
**WO 2015/052438 (16.04.2015 Gazette 2015/15)**

(54) **PROCÉDÉ, SYSTÈME ET PROGRAMME D'ORDINATEUR D'ANALYSE ACOUSTIQUE D'UNE MACHINE**

VERFAHREN, SYSTEM UND COMPUTERPROGRAMM FÜR DIE AKUSTISCHE ANALYSE EINER MASCHINE

METHOD, SYSTEM AND COMPUTER PROGRAM FOR THE ACOUSTIC ANALYSIS OF A MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2013 FR 1359897**

(43) Date de publication de la demande:
**06.07.2016 Bulletin 2016/27**

(73) Titulaire: **Safran Aircraft Engines**
**75015 Paris (FR)**

(72) Inventeurs:
• **BENSE, William**
**F-77550 Moissy-Cramayel Cedex (FR)**
• **LACAILLE, Jérôme**
**F-77550 Moissy-Cramayel Cedex (FR)**
• **GEREZ, Valerio**
**F-77550 Moissy-Cramayel Cedex (FR)**

(74) Mandataire: **Brevalex**
**Tour Trinity**
**1 B Place de la Défense**
**92400 Courbevoie (FR)**

(56) Documents cités:
EP-A2- 2 538 034      DE-A1- 102012 105 414
US-A1- 2009 091 441   US-A1- 2010 139 403
US-A1- 2010 161 255

EP 3 039 397 B1

**Description**

**DOMAINE TECHNIQUE**

L'invention se rapporte au domaine de surveillance d'une machine, par exemple un moteur tel qu'un moteur d'aéronef. En particulier, l'invention concerne un procédé et un système d'analyse acoustique d'une machine pour en détecter ou en pronostiquer des anomalies.

**ÉTAT DE LA TECHNIQUE ANTÉRIEURE**

Une machine est un système mécanique soumis à des contraintes qui peuvent engendrer l'usure de ses composants. On cherche donc d'une manière générale à surveiller le plus efficacement possible l'état d'une machine pour détecter ou prédire l'apparition de défauts.

Si une machine, par exemple un moteur d'aéronef, présente l'inconvénient de générer du bruit, on peut toutefois imaginer utiliser cet inconvénient pour réaliser un diagnostic ou un pronostic de défauts de manière non intrusive.

On connaît ainsi de la publication US 2007/0255563 A1 un système de surveillance de turboréacteur d'avion selon lequel on enregistre des signaux acoustiques issus du turboréacteur en fonctionnement à l'aide de deux microphones positionnés sous la nacelle du turboréacteur, et on compare les signaux acquis à des signaux de référence au moyen d'un algorithme de reconnaissance vocale. On peut ainsi identifier des « mots » représentatifs de l'état du turboréacteur parmi les signaux acquis.

Si un tel système présente l'avantage d'utiliser des algorithmes de reconnaissance vocale éprouvés, son efficacité reste toutefois limitée. Les sources de bruit étant effectivement multiples sur un turboréacteur, les signaux acoustiques acquis à analyser sont relativement complexes et les « mots » représentatifs d'un défaut peuvent fortement varier en amplitude, phase et/ou en fréquence. Il n'est donc pas aisé d'identifier de tels « mots » représentatifs, et il existe donc un risque de ne pas parvenir à identifier qu'un signal acoustique acquis est bien représentatif d'un défaut donné, notamment lorsqu'un « mot » issu des signaux acoustiques acquis diffère trop fortement d'un « mot » des signaux de référence.

On connaît aussi les documents EP2538034, US 2010/161255, US 2009/091441, et US 2010/139403 qui décrivent des systèmes d'analyse de signaux sonores pour détecter des défauts dans des machines tournantes, par le biais d'analyses fréquentielles des signaux captés par au moins un microphone.

On connaît aussi le document DE 10 2012 105414 qui décrit un système de surveillance d'un site par des réseaux de microphones, comportant la localisation des défauts et la fourniture d'ondes de pression acoustiques améliorées en supprimant le bruit de fond.

**EXPOSÉ DE L'INVENTION**

L'invention a pour objectif de proposer une technique permettant d'améliorer le diagnostic ou le pronostic de défauts d'une machine à partir d'une analyse du bruit généré par la machine. Elle propose à cet effet un procédé selon la revendication 1.

Certains aspects préférés mais non limitatifs de ce procédé sont les suivants :

- la ou les signatures acoustiques de référence peuvent chacune correspondre à une signature acoustique caractéristique d'un défaut de la machine, et le procédé comprend une identification d'un défaut de la machine lorsqu'un écart entre une signature acoustique caractéristique d'une source d'origine sonore séparée et la signature acoustique de référence caractéristique dudit défaut est inférieur à un seuil ;

- le procédé peut comprendre une étape de détermination d'au moins une signature acoustique de référence, ladite étape comportant :

  ◦ une acquisition de au moins un signal acoustique de référence délivré par au moins un microphone positionné au sein de au moins une machine de référence ;
  ◦ une séparation d'au moins un signal acoustique de référence en une pluralité de sources d'origine sonore de référence ;
  ◦ pour au moins une des sources d'origine sonore de référence séparées, une détermination d'une signature acoustique caractéristique ;
  ◦ un enregistrement dans la base de données de référence de la signature acoustique caractéristique d'au moins une source d'origine sonore de référence séparée ;

- au moins une machine de référence peut être une machine sans défaut ;

- au moins une machine de référence peut être la même machine considérée antérieurement ou une machine du même type ayant le même historique d'exploitation ;

- au moins une machine de référence peut comprendre au moins deux machines.

L'invention a également pour objet un système d'analyse acoustique d'une machine, comprenant des moyens d'acquisition de au moins un signal acoustique délivré par une pluralité de microphones positionnés au sein de la machine, et une base de données de référence dans laquelle est enregistrée au moins une signature acoustique de référence, caractérisé en ce qu'il comporte en outre un module de séparation de sources, un module de détermination de signature acoustique et un module de comparaison de signatures acoustiques configurés pour la mise en oeuvre du procédé selon l'invention.

Et l'invention a également pour objet un produit programme d'ordinateur comprenant des instructions de code pour l'exécution des étapes du procédé selon l'invention, lorsque ledit programme est exécuté sur un ordinateur.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 illustre de manière schématique un exemple de moyens matériels mis en oeuvre dans le système ou procédé d'analyse acoustique d'une machine selon un premier mode de réalisation possible de l'invention ;
- la figure 2 illustre de manière schématique un exemple de moyens matériels mis en oeuvre dans le système ou procédé d'analyse acoustique d'une machine selon un deuxième mode de réalisation possible de l'invention ;
- la figure 3 illustre de manière schématique un exemple de moyens matériels mis en oeuvre dans le système ou procédé d'analyse acoustique d'une machine selon un troisième mode de réalisation possible de l'invention ;
- la figure 4 illustre de manière schématique un exemple de moyens matériels mis en oeuvre dans le système ou procédé d'analyse acoustique d'une machine selon un quatrième mode de réalisation possible de l'invention.

**EXPOSÉ DÉTAILLÉ DE MODES DE RÉALISATION PARTICULIERS**

L'invention propose un procédé, un système et un produit programme d'ordinateur permettant de détecter ou de pronostiquer des défauts d'une machine via une analyse du bruit généré par la machine. D'une manière générale, l'invention repère des signatures acoustiques caractéristiques au moyen d'un algorithme de reconnaissance mis en oeuvre, non pas sur les enregistrements du bruit généré par la machine, mais sur des signaux résultants d'une décomposition desdits enregistrements en des sources sonores d'origine desdits enregistrements.

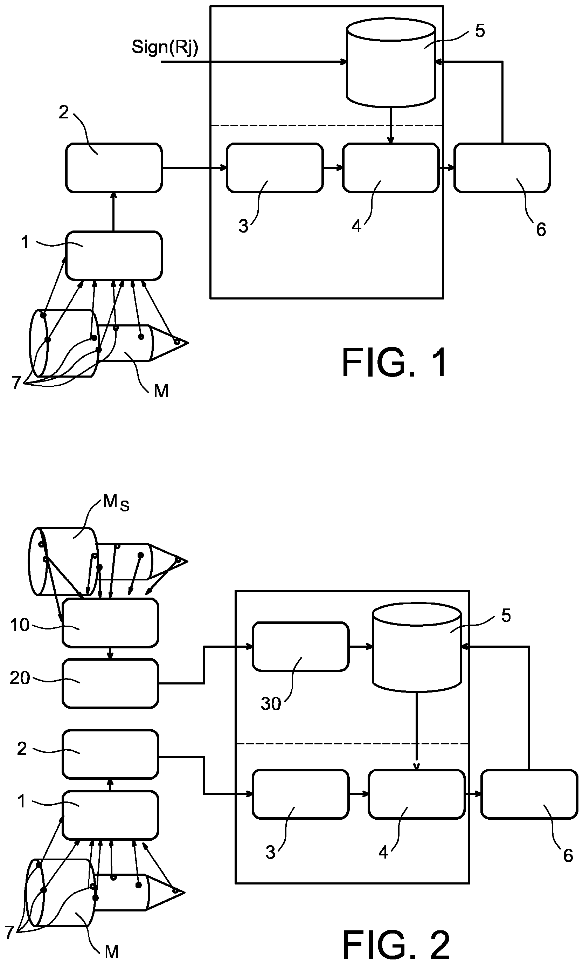

Les figures 1 à 4 illustrent des exemples de moyens matériels mis en oeuvre dans différents modes de réalisation possibles du système et procédé d'analyse acoustique d'une machine testée M, conformes à de possibles modes de réalisation de l'invention. Sur ces figures, les éléments communs portent les mêmes références.

La machine testée M peut être un moteur de véhicule aérien ou terrestre, par exemple un moteur d'aéronef comme illustré schématiquement sur les figures 1-4. L'invention n'est toutefois limitée à un tel exemple illustratif, mais s'étend d'une manière générale à l'étude de tout système mécanique générant du bruit.

Au moins un microphone 7 est positionné au sein de la machine M, par exemple sous la nacelle d'un moteur d'aéronef. On utilise de préférence une pluralité de microphones, par exemple une dizaine de microphones, ce qui permet notamment de les répartir entre les différents composants de la machine, par exemple entre le carter de soufflante, le carter principal et le cône d'éjection des gaz d'un moteur d'aéronef.

Le système comporte des moyens d'acquisition 1 de au moins un signal acoustique délivré par un microphone 7 positionné au sein de la machine testée M et une base de données de référence 5 dans laquelle est enregistrée au moins une signature acoustiques de référence Sign($R_j$).

Cette acquisition permet de former une matrice X de signaux acoustiques composée d'autant de lignes que de microphones, et dont le nombre de colonnes dépend du nombre d'échantillons considéré pour l'analyse. La $i^{ème}$ ligne de la matrice X correspond ainsi aux différents échantillons d'un signal acoustique enregistrés par un microphone pendant une durée donnée. La $j^{ème}$ colonne de la matrice X correspond à la mesure à un instant d'échantillonnage donné des signaux des différents microphones. Ainsi, par signal acoustique acquis, on entend dans le cadre de l'invention un ensemble d'échantillons sur un bloc temporel d'une durée donnée. L'invention est mise en oeuvre sur un bloc temporel, et peut bien évidemment être répétée sur d'autres bloc temporels.

Le système comporte par ailleurs une chaîne de traitement constituée d'un module de séparation de sources 2, d'un module de détermination de signature acoustique 3 et d'un module de comparaison de signatures acoustiques 4.

Le module de séparation de sources 2 est plus particulièrement configuré pour mettre en oeuvre un algorithme de séparation de source pour séparer (décomposer) au moins un signal acoustique en une pluralité de sources d'origine sonore, ledit signal étant modélisé comme un mélange de composantes correspondant chacune à une source d'origine sonore. Cet algorithme vient estimer des sources d'origine sonore à partir des signaux acoustiques mesurés (également dénommés observations dans le cadre de la séparation de source).

Le ou les signaux acoustiques acquis sont relativement complexes dans la mesure où les sources de bruit sont nombreuses. On peut ainsi considérer que le ou les signaux acoustiques recueillent des mélanges de sources différentes. L'invention propose de décomposer le ou les mélanges acquis par le ou les microphones 7 pour produire des signaux virtuels qui permettent d'isoler des sources sonores originales.

Le module de séparation de sources 2 peut pour cela être configuré de manière à réaliser une séparation aveugle de sources qui repose sur une modélisation du ou des signaux acquis sous la forme d'un mélange linéaire de composantes correspondant chacune à une source d'origine sonore.

La séparation aveugle de sources permet d'extraire des sources indépendantes à partir de signaux mesurés. En d'autres termes, cette séparation permet d'estimer une matrice de sources S et une matrice de séparation A telles que S=A*X, où X correspond à la matrice des signaux acoustiques acquis. On a ainsi X=A$^{-1}$*S où la matrice inverse de la matrice de séparation A (matrice de mélange A$^{-1}$) illustre la contribution de chacune des sources à la formation de chacun des signaux acoustiques, c'est-à-dire le poids de chacune des composantes du signal acoustique correspondant à une source d'origine.

Dans un mode de réalisation, on considère que la matrice S est de même dimensions que la matrice X, le nombre de sources d'origine étant ainsi égal au nombre de voies de mesure.

Dans un mode de réalisation, la séparation aveugle de sources est une séparation de type analyse en composantes indépendantes (ICA pour « Independent Component Analysis »), par exemple selon l'algorithme JADE (« (Joint Approximate Diagonalization of Eigenmatrices »). Dans un autre mode de réalisation, la séparation aveugle de sources est une séparation de type analyse en composantes parcimonieuses (SCA pour « Sparse Component Analysis »).

Dans une variante de réalisation, le système comprend un banc de filtres de Gabor agencé en amont du module de séparation de sources 2 et configuré pour appliquer une transformée de Gabor discrète aux signaux mesurés, avant de leur appliquer la séparation aveugle de source. -Les filtres de Gabor correspondent à des fréquences pures modulées par une gaussienne. Ils sont très adaptés à la reconnaissance de textures sur des images et peuvent donc aisément être exploités sur les représentations temps-fréquence des signaux mesurés.

La transformée de Gabor discrète a l'avantage d'être inversible et donc de permettre non seulement l'analyse du signal mais aussi la construction d'un banc de filtres (reconstruction de signaux temporels après filtrage). L'application de ce banc de filtres permet de compenser le faible nombre de capteurs et conduit à la simulation de plusieurs sources correspondant à des textures différentes du périodogramme. On applique ensuite la séparation de source aux sorties du banc de filtres plutôt qu'aux signaux d'origine.

Le module de séparation de sources 2 peut aussi être configuré pour réaliser une décomposition non aveugle. Par exemple, lorsque le nombre d'arbres de rotation indépendants du moteur est connu, il est possible par une méthodologie de poursuite d'ordres de séparer les informations issues de chacun des arbres et le bruit indépendant des vitesses de rotation.

Une séparation de source non aveugle utilise la configuration physique du moteur. D'une manière générale, les vitesses de rotations des arbres et les nombres d'aubes d'engrenages ainsi que la définition des paliers à roulement (diamètres et nombres de billes ou rouleaux) font qu'il est possible de connaître d'avance les fréquences correspondant au corps haute pression et à la partie basse pression. Il est ainsi possible de filtrer les fréquences correspondantes ainsi que les diverses modulations. Un signal dépendant uniquement de chaque arbre peut ainsi être isolé. Il en est de même des signaux pour les modulations a priori de chaque roulement (en amplitude) ou engrenage (en fréquence), modulation apparaissant en cas de défauts chargés par un balourd. Le signal résiduel, après extraction des signaux isolés, peut ensuite être traité à part. Ce signal résiduel contient notamment des résonances de carters et des bruits issus de la propagation des fluides (sifflements) et de la chambre de combustion. Certaines de ces résonances peuvent aussi être filtrées lorsque les modes propres des composants du moteur sont connus.

A l'issue de l'étape de séparation de sources réalisée par le module 2, on dispose ainsi de la matrice

$$S = \begin{bmatrix} S_1 \\ S_2 \\ ... \\ S_N \end{bmatrix}$$

de sources regroupant sur chaque ligne les échantillons d'une source $S_i$ d'origine sonore séparée. Le recours à ces sources « virtuelles » pour la réalisation d'une reconnaissance de signatures acoustiques de référence comme décrit ci-après s'avère avantageux en ce que, à la différence des signaux acoustiques acquis, ces sources sont indépendantes ou quasi-indépendantes. La reconnaissance de signatures acoustiques de référence est alors plus rapide et plus fiable.

Le module de détermination de signature acoustique 3 est quant à lui plus particulièrement configuré pour déterminer au moins une signature acoustique caractéristique Sign($S_i$) de au moins une source $S_i$ d'origine sonore séparée. On vient de préférence déterminer une signature acoustique caractéristique Sign($S_i$) de chacune des sources $S_i$ d'origine sonore séparées. Dans un mode de réalisation possible, une ou plusieurs desdites sources $S_i$ d'origines sonores séparées sont considérées comme étant du bruit non attribuable à un composant spécifique de la machine M, et ne font alors pas l'objet de la détermination et comparaison de signatures acoustiques.

Par signature caractéristique, on entend une empreinte unique de la source sous la forme par exemple d'un vecteur comportant un ou plusieurs indicateurs extraits d'une analyse, par exemple une analyse fréquentielle mettant en oeuvre une transformée de Fourier, d'une source sonore d'origine séparée.

Le module de comparaison de signatures acoustiques 4 est lui configuré pour comparer la ou les signatures acoustiques caractéristiques Sign($S_i$) générées par le module de détermination de signature acoustique 3, à la ou les signatures acoustiques de référence Sign($R_j$) enregistrées dans la base de données de référence 5.

Ces modules 3 et 4 sont ainsi configurés pour mettre en oeuvre une reconnaissance de signatures de référence dans des signaux acoustiques (ici les signaux des sources d'origine séparées), par exemple une méthode de reconnaissance vocale ou d'extraits musicaux. A titre d'exemple illustratif, les modules 3 et 4 mettent en oeuvre la méthode décrite dans l'article de Wang, Avery Li-Chun intitulé « An Industrial-Strength Audio Search Algorithm », Shazam Entertainment, 2003. Le module de détermination de signature acoustique 3 est alors configuré pour élaborer un spectrogramme de au moins une source d'origine séparée, identifier des pics d'intensité par seuillage du spectrogramme, et calculer des distances entre des pics d'intensité.

Les modules 3 et 4 peuvent également mettre en oeuvre une méthode de projections parcimonieuses selon laquelle une transformation spectrale (spectrogramme) d'une source d'origine séparée est projetée sur un espace de dimension réduite munie d'une métrique. La projection peut être réalisée selon un modèle de projection par apprentissage réalisant par exemple une régression linéaire selon une analyse en composantes principales (PCA pour « Principal Component Analysis ») ou une factorisation matricielle non-négative (NMF pour « Non-Negative Matrix Factorisation »), ou encore selon un modèle de projection mathématique basé par exemple sur des filtres d'ondelettes (« curvelets »).

Le résultat de la reconnaissance de signatures de référence peut être fourni à un module d'interface homme-machine 6 notamment configuré pour permettre d'alerter un opérateur lorsqu'un défaut de la machine testée M est identifié ou pronostiqué.

Dans un premier mode de réalisation illustré sur la figure 1 réalisant une reconnaissance de signatures de défauts, la ou les signatures acoustiques de référence Sign($R_j$) correspondent chacune à une signature acoustique caractéristique d'un défaut de la machine. Le module de comparaison de signatures 4 est alors configuré pour repérer une signature de défaut parmi la ou les signatures des sources d'origine séparées. En d'autres termes, le module 4 est alors configuré pour réaliser l'identification d'un défaut j de la machine lorsqu'un écart entre une signature acoustique caractéristique d'une source d'origine sonore séparée Sign($S_i$) et la signature acoustique de référence caractéristique dudit défaut Sign($R_j$) est inférieur à un seuil.

Dans un mode de réalisation possible, lorsque le défaut identifié j est confirmé par exemple via une inspection de maintenance, la base de données de référence 5 peut être enrichie en y enregistrant la signature acoustique caractéristique d'une source d'origine sonore séparée Sign($S_i$) proche de la signature acoustique de référence caractéristique dudit défaut Sign($R_j$). Dans le cas contraire, le seuil d'identification de défaut peut être modifié pour éviter toute fausse alarme. Par ailleurs, lors de la survenue d'un défaut, identifié en exploitation ou en maintenance par exemple mais non identifié par la comparaison de signatures acoustiques, le signal acoustique dudit défaut peut alors être acquis et utilisé pour enregistrer une signature acoustique de référence dudit défaut dans la base de données de référence.

Dans les autres modes de réalisation illustrés par les figures 2 à 4, une étape de détermination de au moins une signature acoustique de référence est réalisée pour compléter la base de données de référence 5. Cette étape comprend les opérations suivantes :

- acquisition de au moins un signal acoustique de référence délivré par un microphone positionné au sein d'une machine de référence Ms, Mt, Ms, Ms2, Md1, Md2, le ou les microphones étant de préférence positionnés aux mêmes endroits que le ou les microphones 7 positionnés dans la machine testée M ;
- séparation de au moins un signal acoustique de référence en une pluralité de sources d'origine sonore de référence Rj au moyen d'un module de séparation de sources 20 similaire au module 2 décrit précédemment ;
- pour au moins une des sources d'origine sonore de référence séparées Rj, de préférence pour chacune des sources d'origine sonore de référence attribuables à un composant spécifique de la machine de référence, détermination d'une signature acoustique caractéristique Sign($R_j$) au moyen d'un module de détermination de signature acoustique 30 similaire au module 3 décrit précédemment ;
- enregistrement dans la base de données de référence 5 de la signature acoustique caractéristique Sign($R_j$) de au moins une source d'origine sonore de référence séparée Rj.

Dans un deuxième mode de réalisation illustré par la figure 2 selon lequel on cherche à identifier une non reconnaissance de signatures saines, on considère une machine de référence sous la forme d'une machine sans défaut Ms. Sont ainsi enregistrées dans la base de données de référence 5 une ou plusieurs signatures caractéristiques de sources sonores de référence caractérisant un fonctionnement sain de la machine.

Le module de comparaison de signatures 4 est alors configuré pour vérifier si pour la machine testée M on retrouve dans la ou les signatures caractéristique des sources d'origine séparées toutes les signatures caractéristiques de sources sonores de référence : si une signature de référence caractérisant un fonctionnement sain n'est pas retrouvée, un défaut est identifié. En d'autres termes, le module 4 est configuré pour réaliser l'identification d'un fonctionnement défectueux de la machine testée M lorsqu'un écart entre une signature acoustique caractéristique d'une source d'origine séparée Sign(Si) et une signature acoustique Sign (Rj) enregistrée dans la base de données de référence est supérieur à un seuil.

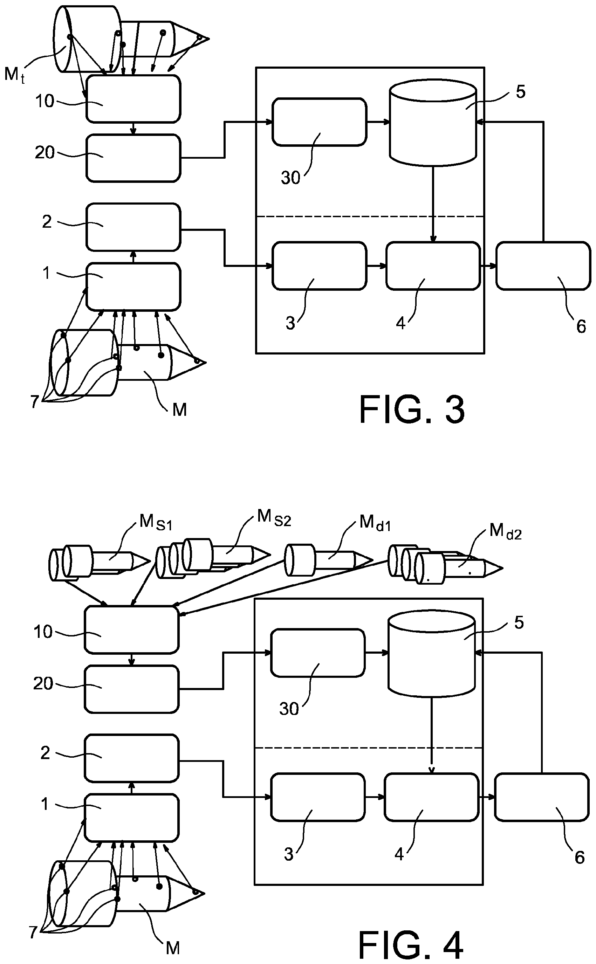

Dans un troisième mode de réalisation illustré par la figure 3 selon lequel on caractérise une évolution des signatures, la machine de référence est la même machine Mt que la machine testée M, considérée antérieurement dans le temps pour la réalisation de l'étape de détermination des signatures acoustiques de référence, en sortie d'usine par exemple alors que l'on sait que la machine Mt n'est pas défectueuse ou au cours de l'exploitation de la machine, par exemple à l'issue d'un certain nombre de vols.

Le module de comparaison de signatures 4 est alors configuré pour calculer un écart global entre la ou les signatures des sources de la machine testée M avec la ou les signatures des sources de la machine de référence Mt. Cet écart permet de caractériser une éventuelle dégradation du moteur depuis la réalisation de l'étape préalable de détermination des signatures acoustiques de référence. En d'autres termes, le module 4 est ici configuré pour réaliser l'identification d'un fonctionnement défectueux de la machine lorsqu'un écart entre un vecteur d'empreinte de la machine composé de la ou des signatures acoustiques caractéristiques des sources d'origine séparées Sign(Si) et un vecteur d'empreinte composé de la ou des signatures acoustiques enregistrées dans la base de données de référence Sign(Rj) est supérieur à un seuil.

Dans une variante de ce troisième mode de réalisation, la machine de référence Mt est une machine du même type que la machine testée M présentant le même historique d'exploitation. La machine de référence Mt et la machine testée M sont par exemple les moteurs d'un même aéronef.

Dans un quatrième mode de réalisation illustré par la figure 4, on a recours à plusieurs machines de référence, l'objectif étant d'identifier laquelle des machines de référence est la plus proche de la machine testée.

Les machines de référence peuvent comprendre une ou plusieurs machines sans défaut Ms1, Ms2, ainsi qu'une ou plusieurs machines défectueuses Md1, Md2 que l'on peut regrouper en classes selon le type d'anomalie (par exemple une classe de moteurs à turbine défectueuse et une autre classe de moteurs à compresseur défectueux). Les classes peuvent être définies par des experts dans l'analyse du bruit généré par la machine (analyse basée sur leur expertise métier ou encore sur une analyse d'un ensemble de spectrogrammes déjà déterminés pour des machines comparables, disponibles dans une base de données de référence, analyse reposant sur une identification par l'expert de zones identiques dans les spectrogrammes). Les classes peuvent également être définies à l'aide d'outils de classification automatiques, mettant par exemple en oeuvre une classification hiérarchique, un modèle de mélange gaussien (par exemple via l'algorithme espérance-maximisation), ou encore une carte auto adaptative, etc.

Le module de comparaison de signatures 4 est ici configuré pour calculer, pour chaque machine de référence ou chaque classe de machines de référence, l'écart entre un vecteur d'empreinte de la machine testée composé de la ou des signatures acoustiques caractéristiques des sources d'origine séparées et un vecteur d'empreinte composé de la ou des signatures acoustiques enregistrées dans la base de données de référence correspondant à la machine de référence ou à la classe de machines de référence. L'écart le plus faible indique la machine de référence, ou la classe de machines de référence, la plus proche de la machine testée. Si la machine de référence est une machine défectueuse, ou si la classe de machines de référence est une classe représentative d'une anomalie, une alerte de fonctionnement défectueux peut être émise par le module 6 d'interface homme-machine. Dans un mode de réalisation possible, lorsque l'écart entre le vecteur d'empreinte de la machine testé et chacun des vecteurs d'empreinte de référence est supérieur à un seuil, on considère que la machine testée est défectueuse et on crée une nouvelle classe avec la machine testée.

Dans les modes de réalisation des figures 2-4, lorsqu'un défaut de la machine testée est identifié, mais que ce défaut n'est pas n'est confirmé par exemple via une inspection de maintenance, le seuil d'identification de défaut peut être modifié pour éviter toute fausse alarme.

L'invention n'est pas limitée au système et procédé tel que décrit précédemment, mais s'étend également à un produit programme d'ordinateur comprenant des instructions de code pour l'exécution des étapes du procédé selon l'invention lorsque ledit programme est exécuté sur un ordinateur.

**Revendications**

1. Procédé d'analyse acoustique d'une machine (M) comprenant l'acquisition d'au moins un signal acoustique délivré par une pluralité de microphones (7) positionnés au sein de la machine, **caractérisé en ce qu'**il comporte en outre les étapes suivantes :

   - séparation, à partir de l'au moins un signal acoustique, d'une pluralité de signaux virtuels chacun représentatif d'une source sonore, ladite séparation comprenant une modélisation dudit au moins un signal acoustique acquis comme un mélange de composantes correspondant chacune à l'une desdites sources sonores, la séparation étant réalisée en constituant, sur un bloc temporel, une matrice (X) de signaux acoustiques composée d'autant de lignes que de microphones, et dont le nombre de colonnes est égal au nombre d'échantillons de chaque signaux acoustiques dans le bloc temporel, puis en constituant, à partir de cette matrice de signaux acoustiques, une matrice de sources (S) regroupant, sur chacune de ses lignes, les échantillons d'un signal virtuel d'une source sonore, les sources sonores étant indépendantes ou quasi-indépendantes ;
- détermination d'une signature acoustique caractéristique d'au moins un signal virtuel d'une source sonore ;
- comparaison des signatures acoustiques caractéristiques à au moins une signature acoustique de référence enregistrée dans une base de données de référence (5).

2. Procédé selon la revendication 1, dans lequel les signatures acoustiques de référence correspondent chacune à une signature acoustique caractéristique d'un défaut de la machine, ledit procédé comprenant une identification d'un défaut de la machine lorsqu'un écart entre une signature acoustique caractéristique d'une desdites sources sonores et la signature acoustique de référence caractéristique dudit défaut est inférieur à un seuil.

3. Procédé selon la revendication 1, comprenant une étape de détermination d'au moins une signature acoustique de référence, ladite étape comportant :

  - une acquisition d'au moins un signal acoustique de référence délivré par au moins un microphone positionné au sein d'au moins une machine de référence ;
  - une séparation d'au moins un signal acoustique de référence en une pluralité de sources sonores de référence
  - pour au moins une des sources sonores de référence séparées, une détermination d'une signature acoustique caractéristique ;
  - un enregistrement dans la base de données de référence (5) de la signature acoustique caractéristique d'au moins une source sonore de référence séparée.

4. Procédé selon la revendication 3, dans lequel au moins une machine de référence est une machine sans défaut, comprenant une identification d'un fonctionnement défectueux de la machine lorsqu'un écart entre une signature acoustique caractéristique d'une desdites sources sonores et une signature acoustique enregistrée dans la base de données de référence (5) est supérieur à un seuil.

5. Procédé selon la revendication 3, dans lequel au moins une machine de référence est la même machine (M) considérée antérieurement ou une machine du même type ayant le même historique d'exploitation, ledit procédé comprenant une identification d'un fonctionnement défectueux de la machine lorsqu'un écart entre un vecteur d'empreinte de la machine composé d'au moins une signature acoustique caractéristique d'une desdites sources sonores et un vecteur d'empreinte composé d'au moins une signature acoustique enregistrée dans la base de données de référence (5) est supérieur à un seuil.

6. Procédé selon la revendication 4, dans lequel au moins un machine de référence comprend au moins deux machines, ledit procédé comprenant un calcul d'écarts entre un vecteur d'empreinte de la machine composé d'au moins une signature acoustique caractéristique d'une desdites sources sonores et des vecteurs d'empreinte constitués chacun d'au moins une signatures acoustique enregistrée dans la base de données de référence (5) correspondant à l'une des machines de référence.

7. Procédé selon l'une des revendications 1 à 6, dans lequel la détermination d'une signature acoustique caractéristique d'une desdites sources sonores comprend une élaboration d'un spectrogramme de ladite source sonore, une identification de pics d'intensité par seuillage du spectrogramme et un calcul de distances entre lesdits pics d'intensité.

8. Procédé selon l'une des revendications 1 à 7, dans lequel la séparation de la pluralité de sources sonores est réalisée par des moyens de traitement informatique configurés pour mettre en oeuvre une analyse en composantes indépendantes.

9. Procédé selon l'une des revendications 1 à 8, dans lequel le nombre de lignes de la matrice de sources (S), est égal au nombre de microphones (7).

10. Système d'analyse acoustique d'une machine (M), comprenant des moyens d'acquisition (1) d'au moins un signal acoustique délivré par une pluralité de microphones (7) positionnés au sein de la machine, et une base de données de référence (5) dans laquelle est enregistrée au moins une signature acoustique de référence, **caractérisé en ce qu'**il comporte en outre :

  - un module de séparation de sources (2) configuré pour séparer, à partir de l'au moins un signal acoustique acquis, une pluralité de signaux virtuels chacun représentatif d'une source sonore permettant de modéliser ledit au moins un signal acoustique acquis comme un mélange de composantes correspondant chacune à l'une desdites sources sonores, le module de séparation de sources étant configuré pour constituer, sur un bloc temporel, une matrice (X) de signaux acoustiques composée d'autant de lignes que de microphones, et dont le nombre de colonnes est égal au nombre d'échantillons de chaque signaux acoustiques dans le bloc temporel, puis pour constituer, à partir de cette matrice de signaux acoustiques, une matrice de sources (S) regroupant, sur chacune de ses lignes, les échantillons d'un signal virtuel d'une source sonore, les sources sonores étant indépendantes ou quasi-indépendantes ;
- un module de détermination de signature acoustique (3) configuré pour déterminer une signature acoustique caractéristique d'au moins un signal virtuel d'une source sonore ;
- un module de comparaison de signatures acoustiques (4) configuré pour comparer les signatures acoustiques caractéristiques à au moins une signature acoustique de référence enregistrée dans la base de données de référence.

11. Système d'analyse acoustique d'une machine (M) selon la revendication 10, dans lequel la machine est un moteur d'aéronef et des microphones (7) sont répartis entre le carter de soufflante, le carter principal et le cône d'éjection des gaz du moteur d'aéronef.

12. Système d'analyse acoustique d'une machine (M) selon l'une des revendications 10 ou 11, dans lequel le module de séparation de sources (2) est configuré de manière à réaliser une séparation aveugle de sources par modélisation du ou des signaux acquis sous la forme d'un mélange linéaire de composantes correspondant chacune à une source sonore virtuelle.

13. Système d'analyse acoustique d'une machine (M) selon la revendication 12, dans lequel la séparation aveugle de sources est une séparation de type analyse en composantes indépendantes, ou une séparation de type analyse en composantes parcimonieuses.

14. Système d'analyse acoustique d'une machine (M) selon l'une des revendications 12 ou 13, qui comprend un banc de filtres de Gabor agencé en amont du module de séparation de sources (2) et configuré pour appliquer une transformée de Gabor discrète aux signaux mesurés, avant que leur soit appliquée la séparation aveugle de source.

15. Produit programme d'ordinateur comprenant des instructions de code qui conduisent le système selon l'une des revendications 10 à 14 à exécuter les étapes suivantes lorsque ledit programme est exécuté sur un ordinateur :

- séparation d'une pluralité de signaux virtuels chacun représentatif d'une source sonore, ladite séparation comprend une modélisation d'un signal acoustique délivré par une pluralité de microphones positionnés au sein d'une machine comme un mélange de composantes correspondant chacune à l'une desdites sources sonores, cette séparation étant réalisée en constituant, sur un bloc temporel, une matrice (X) de signaux acoustiques composée d'autant de lignes que de microphones, et dont le nombre de colonnes est égal au nombre d'échantillons de chaque signaux acoustiques dans le bloc temporel, puis en constituant, à partir de cette matrice de signaux acoustiques, une matrice de sources (S) regroupant, sur chacune de ses lignes, les échantillons d'un signal virtuel d'une source sonore, les sources sonores étant indépendantes ou quasi-indépendantes ;
- détermination d'une signature acoustique caractéristique d'au moins un signal virtuel d'une source sonore ;
- comparaison des signatures acoustiques caractéristiques à au moins une signature acoustique de référence enregistrée dans une base de données de référence (5).

**Patentansprüche**

1. Verfahren zur akustischen Analyse einer Maschine (M), das das Erfassen mindestens eines akustischen Signals umfasst, das von einer Vielzahl von Mikrophonen (7) geliefert wird, die innerhalb der Maschine positioniert sind, **dadurch gekennzeichnet, dass** es weiter die folgenden Schritte umfasst:

- Trennen, auf Grundlage des mindestens einen akustischen Signals, einer Vielzahl von virtuellen Signalen, die jeweils für eine Schallquelle repräsentativ sind, wobei das Trennen ein Modellieren des mindestens einen akustischen Signals umfasst, das als eine Mischung von Komponenten erfasst wird, die jeweils einer der Schallquellen entsprechen, wobei das Trennen durch Bilden, über einen Zeitblock, einer Matrix (X) von akustischen Signalen, die aus ebenso vielen Zeilen wie Mikrofonen besteht und deren Spaltenanzahl gleich der Anzahl an Abtastwerten jedes akustischen Signals in dem Zeitblock ist, und anschließend durch Bilden, auf Grundlage dieser Matrix von akustischen Signalen, einer Quellenmatrix (S) ausgeführt wird, die über jede ihrer Zeilen die Abtastwerte eines virtuellen Signals einer Schallquelle gruppiert, wobei die Schallquellen unabhängig oder quasi-unabhängig sind;
- Bestimmen einer akustischen Signatur, die für mindestens ein virtuelles Signal einer Schallquelle charakteristisch ist;
- Vergleichen der charakteristischen akustischen Signaturen mit mindestens einer akustischen Referenzsignatur, die in einer Referenzdatenbank (5) gespeichert ist.

2. Verfahren nach Anspruch 1, wobei die akustischen Referenzsignaturen jeweils einer akustischen Signatur entsprechen, die für eine Störung der Maschine charakteristisch ist, wobei das Verfahren ein Identifizieren einer Störung der Maschine umfasst, wenn eine Abweichung zwischen einer akustischen Signatur, die für eine der Schallquellen charakteristisch ist, und der akustischen Referenzsignatur, die für die Störung charakteristisch ist, kleiner als eine Schwelle ist.

3. Verfahren nach Anspruch 1, das einen Schritt des Bestimmens mindestens einer akustischen Referenzsignatur umfasst, wobei der Schritt umfasst:

     - ein Erfassen mindestens eines akustischen Referenzsignals, das von mindestens einem Mikrofon geliefert wird, das innerhalb mindestens einer Referenzmaschine positioniert ist;
     - ein Trennen mindestens eines akustischen Referenzsignals in eine Vielzahl von Referenzschallquellen,
     - ein Bestimmen, für mindestens eine der getrennten Referenzschallquellen, einer charakteristischen akustischen Signatur;
     - ein Speichern der akustischen Signatur, die für mindestens eine getrennte Referenzschallquelle charakteristisch ist, in der Referenzdatenbank (5).

4. Verfahren nach Anspruch 3, wobei mindestens eine Referenzmaschine eine störungsfreie Maschine ist, das ein Identifizieren einer Funktionsstörung der Maschine umfasst, wenn eine Abweichung zwischen einer charakteristischen akustischen Signatur einer der Schallquellen und einer akustischen Signatur, die in der Referenzdatenbank (5) gespeichert ist, größer als eine Schwelle ist.

5. Verfahren nach Anspruch 3, wobei mindestens eine Referenzmaschine dieselbe Maschine (M), zuvor betrachtet, oder eine Maschine desselben Typs ist, die dieselbe Betriebsgeschichte aufweist, wobei das Verfahren ein Identifizieren einer Funktionsstörung der Maschine umfasst, wenn eine Abweichung zwischen einem Fingerabdruckvektor der Maschine, der aus mindestens einer akustischen Signatur besteht, die für eine der Schallquellen charakteristisch ist, und einem Fingerabdruckvektor, der aus mindestens einer in der Referenzdatenbank (5) gespeicherten akustischen Signatur besteht, größer als eine Schwelle ist.

6. Verfahren nach Anspruch 4, wobei mindestens eine Referenzmaschine mindestens zwei Maschinen umfasst, wobei das Verfahren ein Berechnen von Abweichungen zwischen einem Fingerabdruckvektor der Maschine, der aus mindestens einer akustischen Signatur besteht, die für eine der Schallquellen charakteristisch ist, und Fingerabdruckvektoren umfasst, die jeweils aus mindestens einer in der Referenzdatenbank (5) gespeicherten akustischen Signatur bestehen, die einer der Referenzmaschinen entspricht.

7. Verfahren nach einem der Ansprüche 1 bis 6, wobei das Bestimmen einer akustischen Signatur, die für eine der Schallquellen charakteristisch ist, ein Erstellen eines Spektrogramms der Schallquelle, ein Identifizieren von Intensitätsspitzen durch Schwellwertbildung des Spektrogramms und ein Berechnen von Abständen zwischen den Intensitätsspitzen umfasst.

8. Verfahren nach einem der Ansprüche 1 bis 7, wobei das Trennen der Vielzahl von Schallquellen durch Informatikverarbeitungsmittel ausgeführt wird, die so konfiguriert sind, dass sie eine Analyse unabhängiger Komponenten implementieren.

9. Verfahren nach einem der Ansprüche 1 bis 8, wobei die Zeilenanzahl der Quellenmatrix (S) gleich der Anzahl der Mikrofone (7) ist.

10. System zur akustischen Analyse einer Maschine (M), das Mittel zum Erfassen (1) mindestens eines akustischen Signals, das von einer Vielzahl von Mikrophonen (7) geliefert wird, die innerhalb der Maschine positioniert sind, und eine Referenzdatenbank (5) umfasst, in der mindestens eine akustische Referenzsignatur gespeichert ist, **dadurch gekennzeichnet, dass** es weiter umfasst:

     - ein Quellentrennmodul (2), das so konfiguriert ist, dass es auf Grundlage des mindestens einen erfassten akustischen Signals eine Vielzahl von virtuellen Signalen, die jeweils für eine Schallquelle repräsentativ sind, trennt, was es ermöglicht, das mindestens eine akustische Signal, das als eine Mischung von Komponenten erfasst wird, die jeweils einer der Schallquellen entsprechen, zu modellieren, wobei das Quellentrennmodul so konfiguriert ist, dass es über einen Zeitblock eine Matrix (X) von akustischen Signalen bildet, die aus ebenso vielen Zeilen wie Mikrofonen besteht und deren Spaltenanzahl gleich der Anzahl an Abtastwerten jedes akustischen Signals in dem Zeitblock ist, und anschließend auf Grundlage dieser Matrix von akustischen Signalen eine Quellenmatrix (S) bildet, die über jede ihrer Zeilen die Abtastwerte eines virtuellen Signals einer Schallquelle gruppiert, wobei die Schallquellen unabhängig oder quasi-unabhängig sind;

- ein Akustiksignatur-Bestimmungsmodul (3), das so konfiguriert ist, dass es eine akustische Signatur bestimmt, die für mindestens ein virtuelles Signal einer Schallquelle charakteristisch ist;

- ein Akustiksignatur-Vergleichsmodul (4), das so konfiguriert ist, dass es die charakteristischen akustischen Signaturen mit mindestens einer akustischen Referenzsignatur, die in der Referenzdatenbank gespeichert ist, vergleicht.

11. System zur akustischen Analyse einer Maschine (M) nach Anspruch 10, wobei die Maschine ein Flugzeugtriebwerk ist und Mikrofone (7) zwischen dem Gebläsegehäuse, dem Hauptgehäuse und dem Gasauslasskonus des Flugzeugtriebwerks verteilt sind.

12. System zur akustischen Analyse einer Maschine (M) nach einem der Ansprüche 10 oder 11, wobei das Quellentrennmodul (2) so konfiguriert ist, dass es eine blinde Quellentrennung durch Modellierung des oder der Signale ausführt, die in Form einer linearen Mischung von Komponenten, die jeweils einer virtuellen Schallquelle entsprechen, erfasst werden.

13. System zur akustischen Analyse einer Maschine (M) nach Anspruch 12, wobei die blinde Quellentrennung eine Trennung vom Typ Analyse unabhängiger Komponenten oder eine Trennung vom Typ Analyse spärlicher Komponenten ist.

14. System zur akustischen Analyse einer Maschine (M) nach einem der Ansprüche 12 oder 13, das eine Gabor-Filterbank umfasst, die stromaufwärts des Quellentrennmoduls (2) angeordnet und so konfiguriert ist, dass sie eine diskrete Gabor-Transformation auf die gemessenen Signale anwendet, bevor die blinde Quellentrennung auf sie angewendet wird.

15. Computerprogrammprodukt, das Codeanweisungen umfasst, die das System nach einem der Ansprüche 10 bis 14 dazu bringen, die folgenden Schritte auszuführen, wenn das Programm auf einem Computer ausgeführt wird:

- Trennen einer Vielzahl von virtuellen Signalen, die jeweils für eine Schallquelle repräsentativ sind, wobei das Trennen ein Modellieren eines akustischen Signals umfasst, das von einer Vielzahl von Mikrophonen, die innerhalb einer Maschine positioniert sind, als eine Mischung von Komponenten geliefert wird, die jeweils einer der Schallquellen entsprechen, wobei dieses Trennen durch Bilden, über einen Zeitblock, einer Matrix (X) von akustischen Signalen, die aus ebenso vielen Zeilen wie Mikrofonen besteht und deren Spaltenanzahl gleich der Anzahl an Abtastwerten jedes akustischen Signals in dem Zeitblock ist, und anschließend durch Bilden, auf Grundlage dieser Matrix von akustischen Signalen, einer Quellenmatrix (S) ausgeführt wird, die über jede ihrer Zeilen die Abtastwerte eines virtuellen Signals einer Schallquelle gruppiert, wobei die Schallquellen unabhängig oder quasi-unabhängig sind;

- Bestimmen einer akustischen Signatur, die für mindestens ein virtuelles Signal einer Schallquelle charakteristisch ist;

- Vergleichen der charakteristischen akustischen Signaturen mit mindestens einer akustischen Referenzsignatur, die in einer Referenzdatenbank (5) gespeichert ist.

## Claims

1. A method for acoustically analysing a machine (M) comprising the acquisition of at least one acoustic signal delivered by a plurality of microphones (7) positioned within the machine, **characterised in that** it further includes the following steps:

- separating, from the at least one acoustic signal, a plurality of virtual signals each representative of a sound source, said separation comprising a modelling of said at least one acoustic signal acquired as a mixture of components each corresponding to one of said sound sources, the separation being carried out by constituting, over a time block, a matrix (X) of acoustic signals composed of as many lines as microphones, and the number of columns of which is equal to the number of samples of each acoustic signal in the time block, then by constituting, from this matrix of acoustic signals, a matrix of sources (S) grouping, on each of its lines, the samples of a virtual signal from a sound source, the sound sources being independent or quasi-independent;

- determining an acoustic signature characteristic of at least one virtual signal of a sound source;

- comparing the characteristic acoustic signatures with at least one reference acoustic signature recorded in a reference database (5).

2. The method according to claim 1, wherein the reference acoustic signatures each correspond to an acoustic signature characteristic of a fault in the machine, said method comprising identifying a fault in the machine when a difference between an acoustic signature characteristic of one of said sound sources and the reference acoustic signature characteristic of said fault is less than a threshold.

3. The method according to claim 1, comprising a step of determining at least one reference acoustic signature, said step including:

    - acquiring at least one reference acoustic signal delivered by at least one microphone positioned within at least one reference machine;
    - separating at least one reference acoustic signal into a plurality of reference sound sources;
    - for at least one of the separated reference sound sources, determining a characteristic acoustic signature;
    - recording in the reference database (5) the characteristic acoustic signature of at least one separated reference sound source.

4. The method according to claim 3, wherein at least one reference machine is a fault-free machine, comprising an identification of defective operation of the machine when a difference between an acoustic signature characteristic of one of said sound sources and an acoustic signature recorded in the reference database (5) is greater than a threshold.

5. The method according to claim 3, wherein at least one reference machine is the same machine (M) considered previously or a machine of the same type having the same operating history, said method comprising an identification of a defective operation of the machine when a difference between a fingerprint vector of the machine composed of at least one acoustic signature characteristic of one of said sound sources and a fingerprint vector composed of at least one acoustic signature recorded in the reference database (5) is greater than a threshold.

6. The method according to claim 4, wherein at least one reference machine comprises at least two machines, said method comprising a calculation of differences between a fingerprint vector of the machine composed of at least one acoustic signature characteristic of one of said sound sources and fingerprint vectors each consisting of at least one acoustic signature recorded in the reference database (5) corresponding to one of the reference machines.

7. The method according to one of claims 1 to 6, wherein the determination of an acoustic signature characteristic of one of said sound sources comprises an elaboration of a spectrogram of said sound source, an identification of intensity peaks by thresholding the spectrogram and calculating distances between said intensity peaks.

8. The method according to one of claims 1 to 7, wherein the separation of the plurality of sound sources is carried out by computer processing means configured to implement an independent component analysis.

9. The method according to one of claims 1 to 8, wherein the number of lines of the source matrix (S) is equal to the number of microphones (7).

10. An acoustic analysis system of a machine (M), comprising means for acquiring (1) at least one acoustic signal delivered by a plurality of microphones (7) positioned within the machine, and a reference database (5) wherein at least one reference acoustic signature is recorded, **characterised in that** it further includes:

    - a source separation module (2) configured to separate, from the at least one acquired acoustic signal, a plurality of virtual signals each representative of a sound source allowing to model said at least one acquired acoustic signal as a mixture of components each corresponding to one of said sound sources, the source separation module being configured to constitute, over a time block, a matrix (X) of acoustic signals composed of as many lines as microphones, and the number of columns of which is equal to the number of samples of each acoustic signal in the time block, then to constitute, from this matrix of acoustic signals, a source matrix (S) grouping together, on each of its lines, the samples of a virtual signal of a sound source, the sound sources being independent or quasi-independent;
    - an acoustic signature determination module (3) configured to determine an acoustic signature characteristic of at least one virtual signal of a sound source;
    - an acoustic signature comparison module (4) configured to compare the acoustic signatures characteristic of at least one reference acoustic signature recorded in the reference database.

11. The acoustic analysis system of a machine (M) according to claim 10, wherein the machine is an aircraft engine and microphones (7) are distributed between the fan casing, the main casing and the cone for ejecting gases from the aircraft engine.

12. The acoustic analysis system of a machine (M) according to one of claims 10 or 11, wherein the source separation module (2) is configured so as to achieve blind separation of sources by modelling the signal(s) acquired in the form of a linear mixture of components each corresponding to a virtual sound source.

13. The acoustic analysis system of a machine (M) according to claim 12, wherein the blind separation of sources is an independent component analysis type separation, or a parsimonious component analysis type separation.

14. The acoustic analysis system of a machine (M) according to one of claims 12 or 13, which comprises a Gabor filter bank arranged upstream of the source separation module (2) and configured to apply a discrete Gabor transform to the measured signals, before blind source separation is applied thereto.

15. A computer program product comprising code instructions which cause the system according to one of claims 10 to 14 to execute the following steps when said program is executed on a computer:

- separating a plurality of virtual signals each representative of a sound source, said separation comprises a modelling of an acoustic signal delivered by a plurality of microphones positioned within a machine as a mixture of components each corresponding to one of said sound sources, this separation being carried out by constituting, over a time block, a matrix (X) of acoustic signals composed of as many lines as microphones, and the number of columns of which is equal to the number of samples of each acoustic signal in the time block, then by constituting, from this matrix of acoustic signals, a source matrix (S) grouping together, on each of its lines, the samples of a virtual signal of a sound source, the sound sources being independent or quasi-independent;
- determining an acoustic signature characteristic of at least one virtual signal of a sound source;
- comparing the characteristic acoustic signatures with at least one reference acoustic signature recorded in a reference database (5).

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070255563 A1
- EP 2538034 A
- US 2010161255 A
- US 2009091441 A
- US 2010139403 A
- DE 102012105414